# EUROPEAN PATENT SPECIFICATION

(11) **EP 0 752 913 B1**
(45) Date of publication and mention of the grant of the patent: **21.04.1999**
(21) Application number: 95914934.5
(22) Date of filing: 29.03.1995
(51) Int. Cl.: B01J 27/138, B01J 27/128, B01J 27/122, B01J 27/08, B01J 27/10

(54) **SUPPORTED LEWIS ACID CATALYSTS FOR HYDROCARBON CONVERSION REACTIONS**
LEWISSÄURE ENTHALTENDE TRÄGERKATALYSATOREN FÜR UMWANDLUNGSREAKTIONEN VON KOHLENWASSERSTOFFEN
CATALYSEURS A ACIDE DE LEWIS SUR SUPPORT POUR REACTIONS DE CONVERSION D'HYDROCARBURES

(30) Priority: 31.03.1994 US 221201
(43) Date of publication of application: 15.01.1997
(73) Proprietor: EXXON CHEMICAL PATENTS INC., Linden, New Jersey 07036-0710 (US)
(72) Inventor: CHEN, Frank, Joung-yei, Edison, NJ 08820 (US); LE DEORE, Christophe, Edison, NJ 08820 (US); SPITZ, Roger, F-69360 Serezin (FR); LENACK, Alain, Louis, Pierre, F-76000 Rouen (FR)
(74) Representative: Mansell, Keith Rodney
(86) International application number: US9503861
(87) International publication number: WO9526815

(56) References cited:
- EP-A- 0 609 123
- WO-A-90/08118
- FR-A- 2 658 498
- US-A- 4 935 565
- US-A- 5 019 652

## Description

### Technical Field

This invention relates to supported Lewis acid catalyst systems, to processes for preparing the catalyst systems, and to various hydrocarbon conversion reactions which are performed in the presence of such catalyst systems. More particularly, the invention relates to effective catalyst systems for cationic polymerization, alkylation, isomerization and cracking reactions comprising at least one Lewis acid supported on an anhydrous dihalide of Cd, Fe, Co, Ni, Mn or Mg.

### Background of the Invention

It is known to prepare metal halide catalysts for hydrocarbon conversion processes including the polymerization or alkylation of hydrocarbons. For example, it is disclosed in British patent 1,091,083 that metal halide polymerization and alkylation catalysts may be prepared by grinding anhydrous dihalides of Cd, Fe, Co, Ni, Mn or Mg to particles having a surface area of 2-60 m²/g, while avoiding rehydration. This British patent further discloses that aluminum trialkyls or aluminum alkyl halide may be used as cocatalysts in conjunction with the anhydrous metal dihalides.

Lewis acids are among the most powerful initiators for hydrocarbon conversion reactions. Such catalysts have been used in liquid, gaseous and solid form, and have been supported or immobilized on various polymeric and inorganic substrates, including, for example, silica gel, alumina, graphite and various clays.

Both supported and unsupported Lewis acid catalysts have been used with varying degrees of success for initiating alkylation reactions and the carbocationic polymerization of olefins, such as isobutene. However, in spite of the advances made in the fields of alkylation and polymerization catalysis, there has been a continuous search for highly efficient catalyst systems which can be recycled or reused in cationic polymerization and alkylation processes. The present invention was developed pursuant to this search.

### Summary of the Invention

According to the invention there is provided a catalyst system effective for catalyzing hydrocarbon conversion reactions, comprising a catalyst support consisting essentially of at least one substrate having the formula MX_{2,} where M is selected from the group consisting of Cd, Fe, Co, Ni, Mn and Mg, and X is a halogen independently selected from the group consisting of flourine, bromine, chlorine, and iodine; and at least one Lewis acid immobilized on said substrate, said catalyst system being free from titanium-, vanadium-, hafnium- and zirconium- containing Ziegler polymerization components with the proviso that, if M is Ni, chromium oxides, halides and/or oxyhalides are not present.

In accordance with one aspect of the present invention, there is provided a supported Lewis acid catalyst system which is active for various hydrocarbon conversion reactions, including, in particular, carbocationic olefin polymerizations, alkylation, isomerization and cracking reactions. According to this aspect, the supported catalyst system is in the form of a particulate magnesium halide substrate on which there is supported or immobilized at least one Lewis acid, such as an aluminum halide or an alkyl aluminum halide.

In another aspect, a supported Lewis acid catalyst system is prepared by cogrinding an anhydrous magnesium halide, such as magnesium chloride, together with a Lewis acid, such as aluminum chloride, and a porogen (solid hydrocarbon), such as adamantane, whereafter the porogen is washed out by means of a suitable solvent and the supported catalyst is recovered.

In yet another aspect, a supported Lewis acid catalyst is prepared by first grinding an anhydrous magnesium halide, such as magnesium chloride, together with a porogen, followed by the addition of a solution of a Lewis acid, such as aluminum chloride, in toluene. Then, after allowing the resulting mixture to stand for about one day at 100° to 120°C, the product mixture is washed several times with toluene to remove any free aluminum chloride. Then, after removing toluene under vacuum, the resulting supported Lewis acid catalyst is recovered as a powder.

Another aspect of the present invention provides a process for using the above supported Lewis acid catalyst systems. In a preferred embodiment of this aspect, there is provided a process for polymerizing a variety of monomers into homopolymers and copolymers, e.g., polyalkenes, by contacting the monomers with the supported Lewis acid catalyst system of this invention under carbocationic polymerization conditions. The monomers which may be used according to this aspect of the invention include those having unsaturation which are conventionally polymerizable using carbocationic Lewis acid catalyst polymerization techniques, such as, for example, olefins characterized by the presence in their structure of the group 〉C=CH₂. To effect the process, at least one inlet stream comprising monomer feed to be polymerized is fed to a reactor having at least one discharge stream. The monomer stream is polymerized in the reactor in the presence of the above-described supported Lewis acid catalyst system. The resulting polymerized polymer is removed from the reactor along with the unreacted monomers in the discharge stream while the catalyst system is retained in the reactor.

In still other aspects, the catalyst systems of this invention may be used in isomerization, cracking and alkylation processes. As is known in the art, alkylation may be simply described as the addition or insertion of an alkyl group into a substrate molecule. Of particular interest is the alkylation of aromatic and hydroxy aromatic substrates, such as benzene, toluene, xylene and phenol. Suitable alkylating agents include, for example, olefins, alkanes, alkyl halides and mixtures. However, particularly preferred alkylating agents for use in the present invention include olefin oligomers, such as propylene oligomers, having from 6 to 50 carbon atoms and having one double bond per molecule.

A significant advantage of the present catalysts systems is that they are stable and do not leach or otherwise deposit free Lewis acid into the reaction medium or, more importantly, into the reaction products. Another advantage is that the present catalyst systems are usable for multiple polymerization or alkylation cycles (in the context of a batch process) without regeneration, resulting in substantial cost savings, as well as the elimination of significant amounts of hazardous waste typically generated in conventional Lewis acid processes. Not only can the Lewis acid catalyst systems of the present invention be employed for multiple cycles of polymerization, alkylation, isomerization and cracking, or on a continuous basis for extended times of polymerization, alkylation, isomerization and cracking, but they can also be recovered readily from the polymerization and alkylation products by simple filtration techniques.

### Detailed Description of the Preferred Embodiments

The novel supported Lewis acid catalyst systems of the present invention may be prepared by fixing or immobilizing at least one Lewis acid on a suitably treated magnesium halide substrate.

For the purposes of this invention the terms fixed and immobilized are used interchangeably and are defined as wherein substantially all of the Lewis acid is incorporated in the layer of the magnesium halide support. In other words, the Lewis acid is not readily extracted by a solvent or diluent under conditions of polymerization or alkylation.

Among the Lewis acids which are contemplated for use in this invention, there may be included the halides of aluminum, the halides of boron and the halides and alkyl halides of zinc. Preferred Lewis acids include, for example, aluminum halide where the halogen is independently selected from the group consisting of flourine, chlorine, bromine and iodine. Non-limiting examples of such preferred Lewis acids include aluminum and zinc chloride and mixtures thereof.

The substrates on which the Lewis acids may be supported include those anhydrous substrates having the formula MX₂, where M is selected from Cd, Fe, Co, Ni, Mn and Mg, and X is a halide. These substrates are sometimes referred as the family of "cadmium chloride layer" structures. Among the more preferred substrates are the magnesium dihalides, such as magnesium dichloride, magnesium dibromide, magnesium diflouride and magnesium diiodide; mixtures of such metal supports can also be used. Magnesium dichloride is the most preferred substrate.

The Lewis acids may be supported on the magnesium halide substrate by any suitable technique. However, it has been found that particularly suitable catalyst systems are obtained when the Lewis acids are supported or fixed to the magnesium substrate by either of two preferred methods. In the first preferred method, sometimes referred to herein as the cogrinding method, anhydrous magnesium halide, preferably magnesium chloride, and at least one Lewis acid, preferably AlCl₃, are coground, together with a porogen (solid hydrocarbon) in an oscillating ball mill. The cogrinding is performed at room temperature for a period of from 1 hour to 10 hours, typically from 4 to 6 hours.

Thus there is provided a process for preparing a catalyst system effective for hydrocarbon conversion reactions, wherein said catalyst system is free from titanium-, vanadium-, hafnium- and zirconium-containing Ziegler-type catalyst components, comprising:
(a) forming an admixture comprising (i) a magnesium halide, (ii) a porogen and (iii) at least one Lewis acid selected from the group consisting of aluminum halides, boron halides and zinc halides and zinc alkyl halides, wherein said halogen is selected from the group consisting of flourine, bromine, chlorine and iodine;
(b) cogrinding said admixture;
(c) washing the coground admixture with a solvent for said porogen to remove said porogen therefrom; and
(d) recovering a powdered supported Lewis acid catalyst system.

In the second preferred method, sometimes referred to herein as the solution impregnation method, anhydrous magnesium halide, preferably magnesium chloride, is first ground in the oscillating ball mill in the presence of the porogen. Thus, there is provided a process for preparing a catalyst system effective for hydrocarbon conversion reactions, wherein said catalyst system is free from titanium-, vanadium-, hafnium-and zirconium-containing Ziegler-type catalyst components, comprising:
(a) forming a porous magnesium halide;
(b) adding to said porous component (a) a solution of at least one Lewis acid selected from the group consisting of aluminum halides, boron halides and zinc halides and zinc alkyl halides, wherein said halogen is selected from the group consisting of flourine, bromine, chlorine and iodine;
(c) washing the resulting mixture to remove any excess Lewis acid compound; and
(d) recovering from said washed mixture a powdered, supported Lewis acid catalyst system.

Other methods known in the art can be used to prepare the MgCl₂ support in order to generate porosity and make it useful for the purposes of this invention. Such methods are generally known in the Ziegler-Natta catalyst art, including, e.g., the use of H₂O and SOCl₂ and the use of H₂O in a thermal treatment at 200°C. in the presence of HCl. Following the preparation of the MgCl₂, a solution of a Lewis acid, preferably AlCl₃ in toluene, is added and allowed to mix for about 1 hour to 2 days at room temperature, or preferably at an elevated temperature on the order of 80° to 140°C., typically from 100° to 120°C. for suitably adjusted periods of time. The resulting mixture is then washed several times with toluene to remove any free AlCl₃, toluene solvent is removed under vacuum, and the resulting supported catalyst system is recovered as a powder.

As indicated above, both in the cogrinding method and in the solution impregnation method, it is preferable to grind the magnesium chloride substrate in the presence of the porogen. While the exact mechanism is not completely understood, and not wishing to be bound by any speculation, it is believed that grinding the magnesium chloride substrate in the presence of the porogen results in surface defects being formed in the magnesium chloride crystal lattice, which defects somehow provide sites where the AlCl₃ may become firmly bonded to the magnesium chloride substrate. The porogen (solid hydrocarbon) materials which are contemplated for use in this invention include, but are not limited to adamantane and solid hydrocarbon polymers which can be dissolved and washed away by means of suitable solvents. A large number of porogen materials which are useful for activating magnesium halides, such as magnesium chloride, are disclosed in the patent literature dealing with Ziegler-Natta catalysis. The choice of porogen is limited only to the extent that it must not react adversely with the Lewis acid components of the catalyst. It is the objective of such treatment of the substrate to increase the specific surface area to greater than about 20 m²/g; preferably greater than 50m²/g; most preferably greater than 100m²/g.

The novel immobilized catalysts of the present invention can be used to polymerize a variety of monomers into homopolymers and copolymers, e.g., polyalkenes. The monomers include those having unsaturation which are conventionally polymerizable using carbocationic Lewis acid catalyst polymerization techniques, and monomers which are the equivalents thereof. The terms cationic and carbocationic are used interchangeably herein. Olefin monomers useful in the practice of the present invention are polymerizable olefin monomers characterized by the presence of one or more ethylenically unsaturated groups. The monomers can be straight or branched monoolefinic monomers, such as vinyl ethers, ethylene, propylene, 1-butene, isobutylene, and 1-octene, or cyclic or acyclic conjugated or non-conjugated dienes.

Suitable olefin monomers are preferably polymerizable terminal olefins; that is, olefins characterized by the presence in their structure of the group 〉C=CH₂. However, polymerizable internal olefin monomers (sometimes referred to in the patent literature as media olefins) characterized by the presence within their structure of the group: 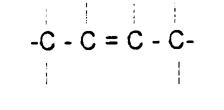 can also be used to form polymer products. When internal olefin monomers are employed, they normally will be employed with terminal olefins to produce polyalkenes which are interpolymers. For purposes of the invention, when a particular polymerized olefin monomer can be classified as both a terminal olefin and an internal olefin, it will be deemed to be a terminal olefin. Thus, 1,3-pentadiene (i.e., piperylene) is deemed to be a terminal olefin for purposes of this invention.

Preferred monomers used in the method for forming a polymer in accordance with the present invention are preferably selected from the group consisting of alpha-olefins and typically C₃-C₂₅ alpha olefins. Suitable alpha-olefins may be branched or straight chain, cyclic, and aromatic substituted or unsubstituted, and are preferably C₃-C₁₆ alpha-olefins. Mixed olefins can be used (e.g., mixed butenes).

The alpha-olefins, when substituted, may be directly aromatic substituted on the 2-carbon position (e.g., monomers such as CH₂=CH-C₆H₅ may be employed). Representative of such monomers include styrene, and derivatives such as alpha-methyl styrene, para-methyl styrene, vinyl toluene and its isomers.

In addition, substituted alpha-olefins include compounds of the formula H₂C=CH-R³-X² wherein R³ represents C₁ to C₂₂ alkyl, preferably C₁ to C₁₀ alkyl, and X² represents a substituent on R³ and can be aryl, alkaryl, or cycloalkyl. Exemplary of such X² substituents are aryl of 6 to 10 carbon atoms (e.g., phenyl or naphthyl) cycloalkyl of 3 to 12 carbon atoms (e.g., cyclopropyl, cyclobutyl, cyclohexyl, cyclooctyl, cyclodecyl, cyclododecyl, and the like) and alkaryl of 7 to 15 carbon atoms (e.g., tolyl, xylyl, ethylphenyl, diethylphenyl or ethylnaphthyl). Also useful are bicyclic, substituted or unsubstituted olefins, such as indene and derivatives, and bridged alpha-olefins of which C₁-C₉ alkyl substituted norbornenes are preferred (e.g., 5-methyl-2-norbornene, 5-ethyl-2-norbornene or 5-(2'-ethylhexyl)-2-norbornene).

Illustrative non-limiting examples of preferred alpha-olefins are propylene, 1-butene, isobutene, 1-pentene, 1-hexene, 1-octene, and 1-dodecene.

Dienes suitable for purposes of this invention include straight chain, hydrocarbon diolefins or cycloalkenyl-substituted alkenes having about 6 to about 15 carbon atoms, including, for example, 1,4-hexadiene, 5-methyl-1,4-hexadiene, 1,3-cyclopentadiene, tetrahydroindene, dicyclopentadiene, 5-methylene-2-norbornene, 5-cyclohexylidene-2-norbornene, 5-vinyl-2-norbornene, allyl cyclohexene and vinyl cyclododecene.

Of the non-conjugated dienes typically used, the preferred dienes are dicylcopentadiene, methyl cyclopentadiene dimer, 1,4-hexadiene, 5-methylene-2-norbornene, and 5-ethylidene-2-norbornene. Particularly preferred diolefins are 5-ethylidene-2-norbornene and 1,4-hexadiene.

The polymers and copolymers which can be manufactured by the process of the present invention are those which can be manufactured by a carbocationic polymerization process and include but are not limited to polyalkenes, such as polyisobutene, poly(1-butene), polystyrene, isobutene styrene copolymers, for example. The term copolymer as used herein is defined to mean a polymer comprising at least two different monomer units.

In particular, the immobilized catalysts of the present invention are especially useful for manufacturing polyisobutene and poly(1-butene) from feedstreams containing butene monomers. It is especially preferred to use refinery feed streams containing C₄ monomers, commonly referred to as Raffinate I and Raffinate II.

The carbocationic polymerization process of the present invention may be carried out in a polar or, preferably, non-polar reaction medium as a continuous, semi-continuous or batch process. Suitable polar solvents which may be used as the polymerization reaction medium include, for example, methyl chloride, dichloromethane, ethyl chloride or nitromethane or the like, whereas suitable non-polar solvents include, for example, carbon tetrachloride, hexane, heptane, cyclohexane, and more generally the linear or branched, saturated or unsaturated hydrocarbon solvents which can be found in the stream of monomers obtained from various cracking processes.

The reactors which may be utilized in the practice of the present invention include conventional reactors and equivalents thereof such as batch reactors, stirred tank reactors, fluidized bed reactors, and continuous tank or tubular reactors, for example.

The reactor will contain sufficient amounts of the immobilized catalyst system of the present invention effective to catalyze the polymerization of the monomer containing feedstream such that a sufficient amount of polymer having desired characteristics is produced. The reaction conditions will be such that sufficient temperature, pressure and residence time are maintained effective to maintain the reaction medium in the liquid state and to produce the desired polymers having the desired characteristics.

Typically, the catalyst to monomer ratio utilized will be those conventional in this art for carbocationic polymerization processes. For example, catalyst to monomer mole ratios will typically be 1/5000 to 1/50, more typically 1/1000 to 1/100, and preferably 1/500 to 1/200. This mole ratio will be calculated by determining the number of Lewis acid catalyst sites in the immobilized Lewis acid catalyst. This can be done by using conventional analytic testing techniques such as elemental analysis, NMR (e.g., aluminum NMR) and absorption spectroscopy. Once the number of Lewis acid sites per unit of immobilized catalyst is known, the mole ratio is calculated in a conventional manner.

The polymerization reaction temperature is conveniently selected based on the target polymer molecular weight and the monomer to be polymerized as well as standard process variable and economic considerations, e.g., rate, temperature control, etc. Typically temperatures from -100°C to +75°C are useful in the process; more typically -50°C to +50°C, depending, as noted above, on polymer molecular weight. Reaction pressure will typically be 200 kPA to 1600 kPA, more typically 300 to 1200 kPA, and preferably 400 to 1000.

The monomer feedstream to this process may be at least one pure or mixed monomer feedstream or combinations thereof. Preferably, the monomer feedstream may be mixed with solvents such as hexane or heptane, and the like. A preferred feedstream to this process may be a pure or mixed refinery butene stream containing one or more of 1-butene, 2-butene, (cis and trans), and isobutene. The preferred feedstreams (preferred on an availability and economic basis) are available from refinery catalytic crackers and steam crackers. These processes are known in the art. The butene streams typically contain between 6 wt.% to 50 wt.% isobutylene together with 1-butene, cis- and trans-2-butene, isobutane and less than 1 wt.% butadiene. One particularly preferred C₄ feedstream is derived from refinery catalytic or steam cracking processes and contains 6-45 wt.% isobutylene, 25-35 wt.% saturated butanes and 15-50 wt.% 1- and 2-butenes. Another preferred C₄ feedstream is referred to as Raffinate II characterized by less than 6 wt. % isobutylene.

The monomer feedstream is preferably substantially anhydrous, that is, it contains less than 50 ppm, and more preferably less than 30 ppm, and most preferably less than 10 ppm, by weight of water. Such low levels of water can be obtained by contacting the feedstream, prior to the reactor, with a water absorbent (such as NaH, CaCl₂, CaSO₄, molecular sieves, for example) or by the use of distillation drying.

The monomer feedstream is typically substantially free of any impurity which is adversely reactive with the catalyst under the polymerization conditions. For example, the monomer feed preferably should be substantially free of bases (such as caustic), sulfur-containing compounds (such as H₂S, COS, and organo-mercaptans, e.g., methyl mercaptan, ethyl mercaptan), N-containing compounds, for example.

The monomer feedstream is typically substantially free of aromatic compounds to avoid alkylation reactions. Therefore, use of an aromatic solvent generally is not envisioned in this polymerization process.

A material acting as a cocatalyst (or promoter) may optionally be added to a monomer feedstream before that feed is introduced to a reactor or it may be added separately to the reactor, e.g., to the catalyst bed. A variety of conventional cocatalysts or equivalents can be used including inorganic acids such as hydrogen halides, lower alcohols, C₂-C₂₄ secondary or tertiary alkyl halides, organic acids such as carboxylic acids and sulfonic acids, and the like. For example, gaseous, anhydrous HCl, may be employed as a cocatalyst. The HCl will be employed in a catalytically effective amount, which amount will generally range from 50 to 5,000 ppm by weight of the monomer feed, preferably 50 to 500 ppm (e.g., 70 to 200 ppm) by weight of the monomer feed when the monomer feed comprises >5 wt.% isobutylene, and preferably from 100-5,000 ppm (e.g., 400-3,000 ppm) by weight when the feed comprises n-butenes and <5 wt.% isobutylene. If anhydrous HCl is added to the feedstream containing isobutene, t-butyl chloride is formed before contact with the solid catalyst.

The order of contacting the monomer feedstream, catalyst, cocatalyst (if any), and solvent is not critical to this invention. Accordingly, the catalyst and cocatalyst can be added to the reactor before or after adding the monomer feedstream and solvent. Alternatively, the catalyst and monomer feedstream can be added before or after adding the cocatalyst and solvent.

The degree of polymerization of polymers (and oligomers) produced with the catalyst of this invention will be determined by the desired end use. Typically the degree of polymerization is from 5 to 5,000; more typically from 10 to 1,000; for lower molecular weight polymers and oligomers the degree of polymerization will typically be 5 to 100. Correspondingly, the number average molecular weight, Mₙ, of a polymeric product will be determined by the monomer and degree of polymerization; for a C₄-based polymer typical values are from 300 to 300,000 gm/mole, depending on the intended end use of the product. Number average molecular weight is conveniently measured by a suitably calibrated gel permeation chromatography (GPC) instrument. The polydispersity index (PDI) of the polymer, also known as the molecular weight distribution (M_{w}/Mₙ), will typically range from 4 to 25, more typically 5 to 22, and preferably 6 to 20.

Lewis acid catalysts of the present invention also find use in other hydrocarbon conversion processes including alkylation, isomerization and cracking. For example, the catalyst may be employed in the cracking of long chain hydrocarbons, e.g., heptane or butane, to produce shorter chain products such as ethane, propane, butanes for example. Additionally, the catalysts may be used to catalyze the isomerization of normal alkanes to their branched chain isomers.

The alkylation process of the present invention will be conducted by contacting the aromatic or hydroxy aromatic substrate and alkylating agent under reaction conditions, including mole ratio, temperature, time and catalyst ratio sufficient to alkylate the substrate.

The hydroxy aromatic substrate compounds useful in the preparation of the alkylated materials of this invention include those compounds having the formula:

Ar-(OH)_{z}

wherein Ar represents 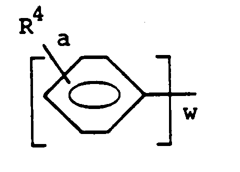 and z is an integer from 1 to 2, w is an integer from 1-3, a is 1 or 2 and R⁴ is a C₁-C₂₄ alkyl radical.

Illustrative of such Ar groups are phenylene, biphenylene, naphthalene and the like.

The aromatic substrate compounds useful in the preparation of the alkylated materials of this invention include those compounds having the formulas:

Ar¹ - R⁵_{b}

and

(Ar¹ - R5_{b})_{y}

wherein Ar¹ represents: 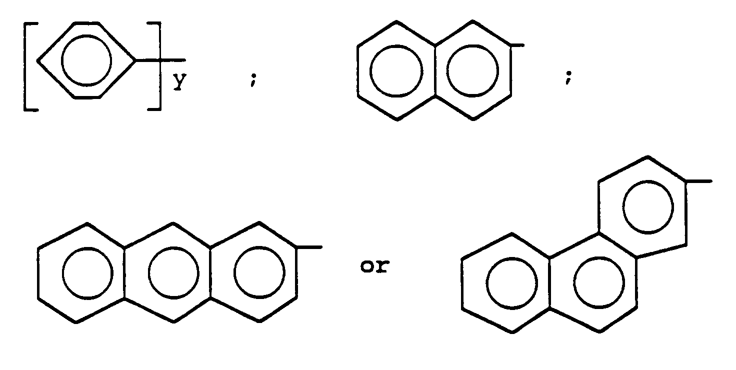 wherein b is one or two; R⁵ is C₁-C₂₄ alkyl, C₃-C₂₄ cycloalkyl, C₆-C₁₈ aryl, C₇-C₃₀ alkylaryl, OH, or H; and y is 1-3.

Illustrative of such Ar¹ groups are benzene, phenylene, biphenylene, naphthalene, and anthracene.

The substrate generally will be contacted in a molar ratio of from 0.1 to 10 preferably from 1 to 7, more preferably from 2 to 5, moles of the substrate per mole of the alkylating agent. Conventional ratios of alkylating agent typically will be used. The ratio typically will be 0.5 to 2:1, more typically 0.8 to 1.5:1, and preferably 0.9 to 1.2:1. The selected catalyst can be employed in widely varying concentrations. Generally, the catalyst will be charged to provide at least 0.001, preferably from 0.01 to 0.5, more preferably from 0.1 to 0.3, moles of Lewis acid catalyst per mole of substrate charged to the alkylation reaction zone. Use of greater than 1 mole of the Lewis acid catalyst per mole of substrate is not generally required. The reactants can be contacted with the present immobilized Lewis acid catalyst system employing any conventional solid-liquid contacting techniques, such as by passing the reactants through a fixed bed of catalyst particles. The upper limit on the moles of catalyst employed per mole of substrate compound is not critical.

The temperature for alkylation can also vary widely, and will typically range from 10 to 250°C, preferably from 20 to 150°C, more preferably from 25 to 80°C.

The alkylation reaction time can vary and will generally be from 1 to 5 hours, although longer or shorter times can also be employed. The alkylation process can be practiced in a batchwise, continuous or semicontinuous manner.

Alkylation processes of the above types are known and are described, for example, in U.S. Patents 3,539,633 and 3,649,229.

The invention will be understood more fully in conjunction with the following examples which are merely illustrative of the principles and practice thereof. The invention is not intended to be limited by these illustrative examples. Parts and percentages where used are parts and percentages by weight, unless specifically noted otherwise.

### Example 1: Catalyst Synthesis (Cogrinding)

A magnesium chloride supported aluminum chloride catalyst was prepared by cogrinding 5 g MgCl_{2,} 1.4 g AlCl₃ and 0.64 g adamantane (porogen) in a high speed ball mill equipped with a vertically oscillating grinding pot that was shaken with a frequency of 6 to 7 Hz with a maximum acceleration of 60 m.s⁻² over 6 cm. The grinding pot was built as a stainless steel Schlenck tube and was operated under an argon atmosphere to avoid contamination. The volume of the grinding pot was 80 cm³. The MgCl₂, AlCl₃ and adamantane were ground for 5 hours at room temperature. The resulting powdered mixture was slurried in heptane to dissolve the adamantane and was then filtered to recover a wet powdered catalyst. The wet catalyst was then washed three times with heptane to remove any remaining adamantane and the resulting catalyst was dried at 100° C. under vacuum and recovered as a powder. The catalyst, which is referred to hereinbelow as Catalyst MgAl-1, contained 4.3% Al and 20.1% Mg, giving a weight ratio of Al:Mg of 0.21.

### Example 2: Catalyst Synthesis (Cogrinding)

The procedure of Example 1 was repeated, except that 3.2 g of MgCl₂, 5 g of AlCl₃ and 0.8 g of adamantane were fed to the ball mill. The resulting catalyst, which is referred to hereinbelow as Catalyst MgAl-2, was analyzed for 12.2% Al and 9.9% Mg, giving a weight ratio of Al:Mg of 1.23.

### Example 3: Catalyst Synthesis (Impregnation)

Anhydrous MgCl₂ (6 g) and adamantane (0.6 g) were milled for 5 hours in accordance with the procedure of Example 1. The resulting mixture was slurried in heptane and transferred under argon to a glass Schlenck flask. The slurry was filtered and washed three times in heptane to remove all of the adamantane. A solution of AlCl₃ in toluene was then added to the milled MgCl₂ and the resulting mixture was allowed to stand for one day at 110° C. The resulting product mixture was filtered, washed three times with toluene to remove free AlCl₃, dried at 100° C. under vaccuum to remove the remaining toluene, and recovered as a powder. The catalyst, which is referred to hereinafter as Catalyst MgAl-3, was analyzed for 3.2% Al and 21.4% Mg, giving a ratio of Al:Mg of 0.14.

### Example 4: 1-Hexene Oligomerization

In a glass flask equipped with a thermometer, there were placed 10 ml of pure 1-hexene monomer (pure 1-hexene corresponds to 8 mol/l) and 150 mg of Catalyst MgAl-1. (Run 1). The monomer/catalyst mixture achieved 100% conversion of the 1-hexene to oligomer in 17 hours. The procedure was repeated (Run 2), except that a small amount of HCl (0.7 mmol) was added to the reaction flask as a cocatalyst. The small amount of HCl cocatalyst did not have any apparent effect on the oligomerization reaction since 100% conversion was again achieved in about 17 hours. The procedure was again repeated in a comparative run (Run 3), except that an unsupported AlCl₃ catalyst (45 mg) was used in place of MgAl-1. The unsupported catalyst resulted in only a 30% conversion of the 1-hexene in 17 hours. The oligohexenes of Runs 1 and 2 were tentatively charcaterized by gas-liquid chromatography (GLC) and by gel permeation chromatography (GPC). The molecular weights of the products were determined on a Waters chromatograph equipped with 4 columns of Micro-Styragel (10⁴, 10³, 500, and 100Å). The calibration was made using polystyrene standards. The number average molecular weight was determined to be 420 for the product of Run 1 and 340 for the product of Run 2 in polystyrene equivalent. From GLC chromatograms, it was estimated that the majority of the oligohexene product had peaks at about Dp=5 or 6. The results of this example are set forth in Table 1.

**TABLE 1**

| Run | Hexene, mol/l | Catalyst, g/l | HCl, mmol | % Conv. | Time hr. |
|---|---|---|---|---|---|
| 1 | 8 | 15 | - | 100 | 17 |
| 2 | 8 | 15 | 0.7 | 100 | 17 |
| 3 | 8 | 4.5 | - | 30 | 17 |

### Example 5: 1-Hexene Oligomerization

The procedure of Example 4 was repeated, except that in several runs, t-butyl chloride (t-BuCl) in heptane was used as a cocatalyst. Each run was conducted with 10 ml of 1-hexene and conversions were calculated on the mass of unvolatile product after filtration on a filter paper and evaporation of heptane and unreacted 1-hexene. The results of this example are set forth in Table 2.

**TABLE 2**

| Run | 1-Hexene, ml | MgAl-1, g/l | t-BuCl, mol/l | % Conv. | Time, hr. |
|---|---|---|---|---|---|
| 4 | 10 | 3 | - | 16 | 22. |
| 5 | 10 | 2.6 | 0.14 | 82 | 0.25 |
| 6 | 10 | 1.3 | 0.2 | 63 | 0.25 |
| 7 | 10 | 2.3 | 0.05 | 45 | 0.25 |

The data in Table 2 clearly indicate that the use of a modestly higher amount of cocatalyst than was used in Run 2 of Example 4 resulted in significantly higher 1-hexene oligomerization conversion rates.

### Example 6: 1-Hexene Oligomerization

The procedure of Example 5 was repeated, except that the Catalyst MgAl-1 was replaced with Catalyst MgAl-2 or with Catalyst MgAl-3. The results of this example are set forth in Table 3.

**TABLE 3**

| Run | 1-Hexene, ml | Catalyst, g/l | t-BuCl, mol/l | % Conv. | Time, min. |
|---|---|---|---|---|---|
| 8 | 10 | MgAl-2, 2 | - | 13 | 15 |
| 9 | 10 | MgAl-2, 3.4 | 0.17 | 100 | 15 |
| 10 | 10 | MgAl-3, 2.5 | 0.2 | 59 | 15 |
| 11 | 10 | MgAl-3, 3.3 | 0.3 | 86 | 15 |

A comparison of the data in Tables 1, 2 and 3 indicates that the rate of 1-hexene conversion is higher when Catalyst MgAl-2 is used than when Catalyst MgAl-1 or unsupported AlCl₃ is used. The data also reflects the high conversion rates obtained when Catalyst MgAl-3 is used in conjunction with t-butyl chloride as a cocatalyst. The relatively higher conversion rates achieved using Catalyst MgAl-2 can be appreciated more fully by reference to Table 4 which compares the calculated activities of AlCl₃, MgAl-1 and MgAl-2, expressed as the mass of polymer produced per mol of aluminum per minute.

**TABLE 4**

| Run | Catalyst (Al, mM) | Polymer Mass, g | Time, min | Activity |
|---|---|---|---|---|
| 1 | MgAl-1, 24 | 6.7 | 1020 | 0.27 |
| 8 | MgAl-2, 9 | 0.87 | 15 | 6.45 |
| 3 | AlCl₃, 33 | 2.01 | 1020 | 0.06 |

From the calculated activities in Table 4, it would appear that the activity (g Pol/mol Al/min) of MgAl-1 is about 4 times higher than that of AlCl₃, and that the activity of MgAl-2 is about 24 times than that of MgAl-1.

### Example 7: 1-Butene Polymerization

In a glass flask equipped with a thermometer and a pressure transducer, there were placed 100 ml of heptane and the amount of 1-butene monomer indicated in Table 5. To this mixture, maintained at the indicated temperature, there was added the indicated amount of catalyst and cocatalyst. The contents of the flask were maintained at the indicated temperature for indicated period of time, whereafter the reaction was discontinued and the reaction products were analyzed by GPC. The results of this example are set forth in Table 5.

**TABLE 5**

| Run | 1-Butene mol/l | Cat., g/l | 1-BuCl mol/l | Conv % | T, °C | Time hr. | Mₙ | M_{w} |
|---|---|---|---|---|---|---|---|---|
| 12 | 2 | MgAl-1, 1.7 | - | 5 | 16 | 2.0 | - | - |
| 13 | 2 | MgAl-1, 2.2 | 0.2 | 80 | 35 | 0.25 | 830 | 1660 |
| 14 | 2 | MgAl-2, 0.64 | 0.3 | 100 | 16-46 | 0.33 | 660 | 1070 |
| 15 | 2 | MgAl-2, 0.64 | - | 60 | 70 | 5.0 | 1450 | 2800 |
| 16 | 2 | MgAl-2, 0.64 | - | 30 | 70 | 2.0 | 1400 | 2670 |
| 17 | 1.6 | MgAl-3, 0.6 | 0.06 | 45 | 40 | 3.0 | - | - |

The data in Table 5 (Run 12), indicates the advantage of using a cocatalyst (t-butyl chloride) in conjunction with the catalysts of this invention. More specifically, Run 1 resulted in only a 5% conversion in 2 hours when a 2 molar solution of 1-butene was polymerized at 16° C. in the presence of Catalyst MgAl-1, without the addition of a cocatalyst; whereas Run 13 resulted in an 80% conversion in only 15 minutes when 1-butene was polymerized at 35° C. using Catalyst MgAl-1 and t-butyl chloride as a cocatalyst.

### Example 8: Toluene Alkylation

In a series of runs, toluene was alkylated using Catalyst MgAl-2 as the catalyst and 1-hexene (Runs 18-20), 1-butene (Run 21) or a mixture of straight chain alpha-olefins (Run 22) comprising 49% C₂₀, 41% C₂₂ and 8% C₂₄ alpha-olefins as the alkylating agent. The reaction products were analyzed by GLC and the percentage of alkylation products was estimated from peak areas displayed on the chromatograms. In the first alkylation run using 1-hexene as the alkylating agent (Run 18), the alkylation reaction took place very quickly as the reaction temperature increased from 20° C. to 60° C. within a few seconds after the hexene was added to the toluene and catalyst. Accordingly, in the remaining runs in which 1-hexene was used as the alkylating agent (Runs 19 and 20), the 1-hexene was added dropwise to a suspension of the catalyst in toluene and reaction temperature was maintained at 0° C. by placing the reaction flask in an ice bath. In all runs, the alkylation reaction was performed in the absence of any cocatalyst. The results of this example are set forth in Table 6.

With reference to Table 6, it can be seen that in all of the runs using 1-hexene as the alkylating agent, the conversion was almost 100% complete and only small traces of oligomerization products were detected. Also, except for Run 18, where the reaction took place very rapidly under uncontrolled temperature increase, even at high toluene/1-hexene ratios, dialkylated and trialkylated products were produced in non-negligible amounts.

**TABLE 6**

| Run | MgAl-2, g/l | Alkylating Agent. mol | toluene, mol | M-D-T* | T, C° | Conv. % |
|---|---|---|---|---|---|---|
| 18 | 1.30 | 1-hexene, 0.08 | 0.18 | 75-25-0 | 20-60 | 100 |
| 19 | 0.75 | 1-hexene, 0.15 | 0.38 | 65-20-14 | 0 | 100 |
| 20 | 1.55 | 1-hexene, 0.08 | 0.32 | 71-17-11 | 0 | 100 |
| 21 | 1.3 | 1-butene, 0.13 | 1.07 | 40-40-11 | 30 | 100 |
| 22 | 1.3 | C₂₀-C₂₄ olefins, 0.06 | 0.04 | 100-0-0 | 0 | 98 |

| | | | | | | |
|---|---|---|---|---|---|---|
| * M = % monoalkylated products; D = % dialkylated products; T = % trialkylated products | | | | | | |

### Example 9: Isobutylene Polymerization

In a glass flask were introduced 0.18 g of catalyst MgAl-1 prepared according to Example 1 and 100 ml of heptane. Starting at room temperature, isobutene is introduced in the reaction mixture by bubbling. The fast reaction increases the temperature of the reaction mixture up to a maximum of 50° C. The introduction of monomer is then stopped and the mixture is allowed to stir for 1/2 hour. The products are then recovered by filtration and after evaporation of solvent and unreacted monomer, 12 g of polymer having a Mₙ=630 and PDI=1.4, determined by GPC, is recovered.

## Claims

1. A catalyst system effective for catalyzing hydrocarbon conversion reactions, comprising a catalyst support consisting essentially of at least one substrate having the formula MX₂, where M is selected from the group consisting of Cd, Fe, Co, Ni, Mn and Mg, and X is a halogen independently selected from the group consisting of fluorine, bromine, chlorine and iodine; and at least one Lewis acid immobilized on said substrate, said catalyst system being free from titanium-, vanadium-, hafnium- and zirconium-containing Ziegler polymerization components, with the proviso that, if M is Ni, chromium oxides, halides and/or oxyhalides are not present.

2. The catalyst system according to Claim 1, wherein said Lewis acid is selected from the group consisting of aluminum halides, boron halides and zinc halides and zinc alkyl halides wherein said halogen is selected from the group consisting of fluorine, bromine, chlorine and iodine.

3. The catalyst system according to Claim 2, wherein said magnesium halide support comprises magnesium chloride.

4. The catalyst system according to any one of Claims 1 to 3, further comprising a porogen.

5. A process for preparing a catalyst system effective for hydrocarbon conversion reactions, wherein said catalyst system is free from titanium-, vanadium-, hafnium- and zirconium-containing Ziegler-type catalyst components, comprising:
(a) forming an admixture comprising (i) a magnesium halide, (ii) a porogen and (iii) at least one Lewis acid selected from the group consisting of aluminum halides, boron halides and zinc halides and zinc alkyl halides, wherein said halogen is selected from the group consisting of fluorine, bromine, chlorine and iodine;
(b) cogrinding said admixture;
(c) washing the coground admixture with a solvent for said porogen to remove said porogen therefrom; and
(d) recovering a powdered supported Lewis acid catalyst system.

6. The process according to Claim 5, wherein said Lewis acid is selected from the group consisting of aluminum halides, boron halides and zinc halides and zinc alkyl halides, wherein said halogen is selected from the group consisting of fluorine, bromine, chlorine and iodine.

7. A process for preparing a catalyst system effective for hydrocarbon conversion reactions, wherein said catalyst system is free from titanium-, vanadium-, hafnium-and zirconium-containing Ziegler-type catalyst components, comprising:
(a) forming a porous magnesium halide;
(b) adding to said porous component (a) a solution of at least one Lewis acid selected from the group consisting of aluminum halides, boron halides and zinc halides and zinc alkyl halides, wherein said halogen is selected from the group consisting of fluorine, bromine, chlorine and iodine;
(c) washing the resulting mixture to remove any excess Lewis acid compound; and
(d) recovering from said washed mixture a powdered, supported Lewis acid catalyst system.

8. The process according to Claim 7, wherein said Lewis acid is allowed to mix with said porous component at from room temperature to 140° C. for a period of from 1 hours to 2 days before said resulting mixture is washed in step (c); and wherein solvent is removed from said washed mixture in step (d) under vacuum.

9. A process for polymerizing olefin monomers, which comprises: contacting olefin monomer under cationic polymerization reaction conditions with a catalytically effective amount of a Lewis acid catalyst system, said catalyst system comprising a catalyst support consisting essentially of a magnesium halide and at least one Lewis acid selected from the group consisting of aluminum halides, boron halides and zinc halides and zinc alkyl halides, wherein said halogen is selected from the group consisting of fluorine, bromine, chlorine and iodine, fixed on said support, said catalyst being free from titanium-, vanadium-, hafnium- and zirconium-containing Ziegler-type catalyst components.

10. A process for alkylating an aromatic or hydroxy aromatic substrate, which comprises: contacting the substrate with an alkylating agent under alkylation conditions with a catalytically effective amount of a Lewis acid catalyst system, said catalyst system comprising a catalyst support consisting essentially of a magnesium halide and at least one Lewis acid selected from the group consisting of aluminum halides, boron halides and zinc halides and zinc alkyl halides, wherein said halogen is selected from the group consisting of fluorine, bromine, chlorine and iodine, fixed on said support, said catalyst system being free from titanium-, vanadium-, hafnium- and zirconium-containing Ziegler-type catalyst components.

11. The process according to either of Claims 9 and 10, wherein said Lewis acid is selected from the group consisting of aluminum halides, boron halides and zinc halides and zinc alkyl halides, wherein said halogen is selected from the group consisting of fluorine, bromine, chlorine and iodine

12. In a hydrocarbon conversion process wherein at least one hydrocarbon is contacted with a conversion catalyst under conversion conditions, the improvement comprising contacting said hydrocarbon with the catalyst system of Claim 1.

13. The process of Claim 12 wherein said hydrocarbon conversion is isomerization.

14. The process of Claim 12 wherein said hydrocarbon conversion is cracking.

## Patentansprüche

1. Katalysatorsystem, das zum Katalysieren von Kohlenwasserstoffumwandlungsreaktionen effektiv ist und einen Katalysatorträger, der im wesentlichen aus mindestens einem Substrat mit der Formel MX₂ besteht, wobei M ausgewählt aus der Gruppe bestehend aus Cd, Fe, Co, Ni, Mn und Mg und X ein Halogen ist, das unabhängig ausgewählt ist aus der Gruppe bestehend aus Fluor, Brom, Chlor und Iod, und mindestens eine auf dem Substrat immobilisierte Lewissäure umfaßt, wobei das Katalysatorsystem frei von titan-, vanadium-, hafnium- und zirconiumhaltigen Ziegler-Polymerisationskomponenten ist, mit der Maßgabe, daß, wenn M Ni ist, keine Chromoxide, -halogenide und/oder -oxyhalogenide vorhanden sind.

2. Katalysatorsystem nach Anspruch 1, bei dem die Lewissäure ausgewählt ist aus der Gruppe bestehend aus Aluminiumhalogeniden, Borhalogeniden und Zinkhalogeniden und Zinkalkylhalogeniden, wobei das Halogen ausgewählt ist aus der Gruppe bestehend aus Fluor, Brom, Chlor und Iod.

3. Katalysatorsystem nach Anspruch 2, bei dem der Magnesiumhalogenidträger Magnesiumchlorid umfaßt.

4. Katalysatorsystem nach einem der Ansprüche 1 bis 3, das außerdem ein Porogen umfaßt.

5. Verfahren zur Herstellung eines Katalysatorsystems, das für Kohlenwasserstoffumwandlungsreaktionen effektiv ist, wobei das Katalysatorsystem frei von titan-, vanadium-, hafnium- und zirconiumhaltigen Katalysatorkomponenten vom Ziegler-Typ ist, bei dem
(a) eine Mischung gebildet wird, die (i) ein Magnesiumhalogenid, (ii) ein Porogen und (iii) mindestens eine Lewissäure ausgewählt aus der Gruppe bestehend aus Aluminiumhalogeniden, Borhalogeniden und Zinkhalogeniden und Zinkalkylhalogeniden umfaßt, wobei das Halogen ausgewählt ist aus der Gruppe bestehend aus Fluor, Brom, Chlor und Iod,
(b) die Mischung miteinander vermahlen wird,
(c) die miteinander vermahlene Mischung mit einem Lösungsmittel für das Porogen gewaschen wird, um das Porogen aus ihr zu entfernen, und
(d) ein pulverisiertes trägergestütztes Lewissäurekatalysatorsystem gewonnen wird.

6. Verfahren nach Anspruch 5, bei dem die Lewissäure ausgewählt ist aus der Gruppe bestehend aus Aluminiumhalogeniden, Borhalogeniden und Zinkhalogeniden und Zinkalkylhalogeniden, wobei das Halogen ausgewählt ist aus der Gruppe bestehend aus Fluor, Brom, Chlor und Iod.

7. Verfahren zur Herstellung eines Katalysatorsystems, das für Kohlenwasserstoffumwandlungsreaktionen effektiv ist, wobei das Katalysatorsystem frei von titan-, vanadium-, hafnium- und zirconiumhaltigen Katalysatorkomponenten vom Ziegler-Typ ist, bei dem
(a) ein poröses Magnesiumhalogenid gebildet wird,
(b) der porösen Komponente (a) eine Lösung von mindestens einer Lewissäure ausgewählt aus der Gruppe bestehend aus Aluminiumhalogeniden, Borhalogeniden und Zinkhalogeniden und Zinkalkylhalogeniden zugefügt wird, wobei das Halogen ausgewählt ist aus der Gruppe bestehend aus Fluor, Brom, Chlor und Iod,
(c) die resultierende Mischung gewaschen wird, um jegliche überschüssige Lewissäureverbindung zu entfernen, und
(d) aus der gewaschenen Mischung ein pulverisiertes trägergestütztes Lewissäurekatalysatorsystem gewonnen wird.

8. Verfahren nach Anspruch 7, bei dem die Lewissäure mit der porösen Komponente bei Raumtemperatur bis 140°C für einen Zeitraum von 1 h bis 2 Tagen Mischen gelassen wird, bevor die resultierende Mischung in Stufe (c) gewaschen wird, und bei dem Lösungsmittel von der gewaschenen Mischung in Stufe (d) im Vakuum entfernt wird.

9. Verfahren zum Polymerisieren von Olefinmonomeren, bei dem Olefinmonomer unter kationischen Polymerisationsreaktionsbedingungen mit einer katalytisch effektiven Menge eines Lewissäurekatalysatorsystems kontaktiert wird, wobei das Katalysatorsystem einen Katalysatorträger, der im wesentlichen aus Magnesiumhalogenid besteht, und mindestens eine Lewissäure ausgewählt aus der Gruppe bestehend aus Aluminiumhalogeniden, Borhalogeniden und Zinkhalogeniden und Zinkalkylhalogeniden, wobei das Halogen ausgewählt ist aus der Gruppe bestehend aus Fluor, Brom, Chlor und Iod, umfaßt, die auf dem Träger fixiert ist, wobei der Katalysator frei von titan-, vanadium-, hafnium- und zirconiumhaltigen Katalysatorkomponenten vom Ziegler-Typ ist.

10. Verfahren zum Alkylieren von aromatischem oder hydroxyaromatischem Substrat, bei dem das Substrat mit Alkylierungsmittel unter Alkylierungsbedingungen mit einer katalytisch effektiven Menge Lewissäure-Katalysatorsystem kontaktiert wird, wobei das Katalysatorsystem einen Katalysatorträger, der im wesentlichen aus Magnesiumhalogenid besteht, und mindestens eine Lewissäure ausgewählt aus der Gruppe bestehend aus Aluminiumhalogeniden, Borhalogeniden und Zinkhalogeniden und Zinkalkylhalogeniden, wobei das Halogen ausgewählt ist aus der Gruppe bestehend aus Fluor, Brom, Chlor und Iod, umfaßt, die auf dem Träger fixiert ist, wobei der Katalysator frei von titan-, vanadium-, hafnium- und zirconiumhaltigen Katalysatorkomponenten vom Ziegler-Typ ist.

11. Verfahren nach Anspruch 9 oder 10, bei dem die Lewissäure ausgewählt ist aus der Gruppe bestehend aus Aluminiumhalogeniden, Borhalogeniden und Zinkhalogeniden und Zinkalkylhalogeniden, wobei das Halogen ausgewählt ist aus der Gruppe bestehend aus Fluor, Brom, Chlor und Iod.

12. Kohlenwasserstoffumwandlungsverfahren, bei dem mindestens ein Kohlenwasserstoff unter Umwandlungsbedingungen mit einem Umwandlungskatalysator kontaktiert wird, wobei die Verbesserung darin besteht, daß der Kohlenwasserstoff mit dem Katalysatorsystem gemäß Anspruch 1 kontaktiert wird.

13. Verfahren nach Anspruch 12, bei dem die Kohlenwasserstoffumwandlung Isomerisierung ist.

14. Verfahren nach Anspruch 12, bei dem die Kohlenwasserstoffumwandlung Cracken ist.

## Revendications

1. Système catalyseur efficace pour catalyser des réactions de conversion d'hydrocarbures, qui comprend un support de catalyseur consistant essentiellement en au moins un substrat de formule MX₂ dans laquelle M est choisi dans le groupe consistant en Cd, Fe, Co, Ni, Mn et Mg et X est un halogène choisi indépendamment dans le groupe consistant en fluor, brome, chlore et iode ; et au moins un acide de Lewis immobilisé sur ce substrat, le système catalyseur en question étant exempt de composants de polymérisation de Ziegler contenant du titane, du vanadium, de l'hafnium et du zirconium, sous réserve que, si M représente le nickel, les oxydes, halogénures et/ou oxyhalogénures de chrome ne soient pas présents.

2. Système catalyseur suivant la revendication 1, dans lequel l'acide de Lewis est choisi dans le groupe consistant en halogénures d'aluminium, halogénures de bore et halogénures de zinc et halogénures de zinc-alkyle, dont l'halogène est choisi dans le groupe consistant en fluor, brome, chlore et iode.

3. Système catalyseur suivant la revendication 2, dans lequel le support formé d'halogénure de magnésium comprend du chlorure de magnésium.

4. Système catalyseur suivant l'une quelconque des revendications 1 à 3, comprenant en outre une substance porogène.

5. Procédé de production d'un système catalyseur efficace pour des réactions de conversion d'hydrocarbures, dans lequel le système catalyseur en question est exempt de composants de catalyseurs du type de Ziegler contenant du titane, du vanadium, de l'hafnium et du zirconium, qui comprend les étapes consistant :
(a) à former un mélange comprenant (i) un halogénure de magnésium, (ii) une substance porogène et (iii) au moins un acide de Lewis choisi dans le groupe consistant en halogénures d'aluminium, halogénures de bore et halogénures de zinc et halogénures de zinc-alkyle, dont l'halogène est choisi dans le groupe consistant en fluor, brome, chlore et iode ;
(b) à co-broyer ce mélange ;
(c) à laver le mélange co-broyé avec un solvant pour la substance porogène afin d'en éliminer cette substance porogène ; et
(d) à recueillir un système catalyseur à base d'acide de Lewis sur support sous forme de poudre.

6. Procédé suivant la revendication 5, dans lequel l'acide de Lewis est choisi dans le groupe consistant en halogénures d'aluminium, halogénures de bore et halogénures de zinc et halogénures de zinc-alkyle dont l'halogène est choisi dans le groupe consistant en fluor, brome, chlore et iode.

7. Procédé de production d'un système catalyseur efficace pour des réactions de conversion d'hydrocarbures, dans lequel le système catalyseur en question est exempt de composants catalyseurs du type de Ziegler contenant du titane, du vanadium, de l'hafnium et du zirconium, qui comprend les étapes consistant :
(a) à former un halogénure de magnésium poreux ;
(b) à ajouter à ce composant (a) poreux une solution d'au moins un acide de Lewis choisi dans le groupe consistant en halogénures d'aluminium, halogénures de bore et halogénures de zinc et halogénures de zinc-alkyle dont l'halogène est choisi dans le groupe consistant en fluor, brome, chlore et iode ;
(c) à laver le mélange résultant pour éliminer l'acide de Lewis en excès ; et
(d) à recueillir de ce mélange lavé un système catalyseur à base d'acide de Lewis sur support sous forme de poudre.

8. Procédé suivant la revendication 7, dans lequel on agite le mélange d'acide de Lewis et de composant poreux à une température allant de la température ambiante à 140°C pendant une période d'une heure à 2 jours avant de laver ce mélange réactionnel dans l'étape (c) ; et on chasse le solvant de ce mélange lavé dans l'étape (d) sous vide.

9. Procédé de polymérisation de monomères oléfiniques, qui comprend : la mise en contact du monomère oléfinique dans des conditions de réaction de polymérisation cationique avec une quantité catalytiquement efficace d'un système catalyseur à base d'acide de Lewis, ce système catalyseur comprenant un support de catalyseur qui consiste essentiellement en un halogénure de magnésium et au moins un acide de Lewis choisi dans le groupe consistant en halogénures d'aluminium, halogénures de bore et halogénures de zinc et halogénures de zinc-alkyle, cet halogène étant choisi dans le groupe consistant en fluor, brome, chlore et iode, fixés sur le support en question, ce catalyseur étant exempt de composants catalyseurs du type de Ziegler contenant du titane, du vanadium, de l'hafnium et du zirconium.

10. Procédé d'alkylation d'un substrat aromatique ou hydroxy-aromatique, qui comprend : la mise en contact du substrat avec un agent alkylant dans des conditions d'alkylation avec une quantité catalytiquement efficace d'un système catalyseur à base d'acide de Lewis, ce système catalyseur comprenant un support de catalyseur consistant essentiellement en un halogénure de magnésium et au moins un acide de Lewis choisi dans le groupe consistant en halogénures d'aluminium, halogénures de bore et halogénures de zinc et halogénures de zinc-alkyle, dont l'halogène est choisi dans le groupe consistant en fluor, brome, chlore et iode, fixés sur ce support, le système catalyseur en question étant exempt de composants catalyseurs du type de Ziegler contenant du titane, du vanadium, de l'hafnium et du zirconium.

11. Procédé suivant l'une des revendications 9 et 10, dans lequel l'acide de Lewis est choisi dans le groupe consistant en halogénures d'aluminium, halogénures de bore et halogénures de zinc et halogénures de zinc-alkyle dont l'halogène est choisi dans le groupe consistant en fluor, brome, chlore et iode.

12. Procédé de conversion d'hydrocarbures dans lequel au moins un hydrocarbure est mis en contact avec un catalyseur de conversion dans des conditions de conversion, le perfectionnement comprenant la mise en contact de cet hydrocarbure avec le système catalyseur suivant la revendication 1.

13. Procédé suivant la revendication 12, dans lequel la conversion d'hydrocarbures est une isomérisation.

14. Procédé suivant la revendication 12, dans lequel la conversion d'hydrocarbures est un craquage.
